# EUROPEAN PATENT APPLICATION

(11) **EP 2 876 544 A1**
(43) Date of publication of application: **27.05.2015**
(21) Application number: 14193730.0
(22) Date of filing: 18.11.2014
(51) Int. Cl.: G06F 3/12, H04L 29/08

(54) **Image forming apparatus, image forming system, and image forming method**

(30) Priority: 19.11.2013 JP 2013239264
(71) Applicant: Panasonic Intellectual Property Management Co., Ltd., Osaka-shi, Osaka 540-6207 (JP)
(72) Inventor: Fukahori, Kazuo, Osaka, 540-6207 (JP); Uemori, Yoshifumi, Osaka, 540-6207 (JP); Matsuda, Takaaki, Osaka, 540-6207 (JP); Yamamoto, Kiyotaka, Osaka, 540-6207 (JP)
(74) Representative: Eisenführ Speiser

(57) **Abstract**

There is provided an image forming apparatus that can form an image by ensuring security and that can reduce a waiting time for image forming. The image forming apparatus includes a communication processing unit that receives an image forming request through a predetermined communication network and that controls reception of image forming data corresponding to the image forming request, and an image forming unit that forms an image according to the image forming data. The communication processing unit restricts reception of the image forming data corresponding to a non-secure image forming request when a start operation of a secure image forming is received.

## Description

### BACKGROUND

### 1. Field of the Invention

The present invention relates to an image forming apparatus, an image forming system, and an image forming method.

### 2. Description of the Related Art

Recently, a printer having various printing functions has become known. For example, printing functions include a function to print in a state where security is not ensured (also referred to as normal printing), a function to print in a state where security is ensured (also referred to as security printing), and a function to print in a state where a priority is given (also referred to as priority printing).

As a printer having a security printing function or a priority printing function, JP-A-6-183110, JP-A-9-263023 and JP-A-2006-92182 are known, for example.

A printer disclosed in JP-A-6-183110 extracts printing information to which a password code is added, and printing information to which a password code is not added, and thereafter, respectively stores the information in separate image buffers to control printing outputs.

A secret document priority output printer disclosed in JP-A-9-263023 makes a request for printing secret document information corresponding to a password to a printing control unit, when a user inputs the password. When a printing unit is not in a printing state, a printing control unit starts printing. When a printing unit is in a printing state, a printing control unit stops printing, transmits page feed information, stores a printing stop position in a printing information storage unit, and preferentially prints a secret document.

An image processing device disclosed in JP-A-2006-92182 preferentially processes execution of the print job performed by an operation panel operator, and thus, during operation of the operation panel, executing print jobs (for example, print jobs being received through a network) performed by those other than the operator is prohibited.

In technologies disclosed in JP-A-6-183110, JP-A-9-263023 and JP-A-2006-92182, when security printing is performed, the time to form image data according to the security printing becomes longer, and the time (waiting time for image forming) that a user waits until an image is formed becomes longer.

### SUMMARY

The present invention is to solve the above-described problems, and provides an image forming apparatus, an image forming system, and an image forming method that can form an image by ensuring security and that can reduce a waiting time for image forming.

An image forming apparatus according to an aspect of the present invention includes a communication processing unit that receives an image forming request through a predetermined communication network, and controls reception of image forming data corresponding to the image forming request, an operation unit that accepts a first operation indicating a start operation of secure image forming, and an image forming unit that forms the image according to the image forming data when the image forming data is received by the communication processing unit, and the communication processing unit restricts reception of the image forming data when the first operation is accepted through the operation unit.

An image forming system according to an aspect of the present invention is an image forming system in which a communication device and an image forming apparatus are connected together through a predetermined communication network, wherein the communication device includes a first communication processing unit that transmits an image forming request, and controls transmission of image forming data corresponding to the image forming request, wherein the image forming apparatus includes a second communication processing unit that receives the image forming request, and controls reception of the image forming data, an operation unit that accepts a first operation indicating a start operation of secure image forming, and an image forming unit that forms an image according to the image forming data when the image forming data is received by the second communication processing unit, wherein the second communication processing unit restricts reception of the image forming data when the first operation is accepted through the operation unit.

An image forming method according to an aspect of the present invention is an image forming method in an image forming apparatus, that includes a communication processing step of receiving an image forming request through a predetermined communication network, and of controlling reception of image forming data corresponding to the image forming request, a step of accepting a first operation indicating a start operation of secure image forming through an operation unit, and a step of forming an image according to the image forming data when the image forming data is received, wherein, in the communication processing, reception of the image forming data is restricted when the first operation is accepted.

According to the aspects of the present invention, it is possible to form an image by ensuring security, and to reduce a waiting time for image forming.

### BRIEF DESCRIPTION OF THE DRAWINGS

Fig. 1 is a schematic diagram illustrating an external appearance example of an image forming apparatus and HCs according to a first embodiment.
Fig. 2 is a block diagram illustrating a configuration example of the periphery of the image forming apparatus according to the first embodiment.
Fig. 3 is a block diagram illustrating a configuration example of the image forming apparatus and the HC according to the first embodiment.
Fig. 4 is a schematic diagram illustrating a configuration example of a communication management table according to the first embodiment.
Fig. 5 is a state transition diagram illustrating an example of an operation sequence at the time of performing security printing in an image forming system according to the first embodiment.
Fig. 6 is a flowchart illustrating an operation example of a security printing management unit according to the first embodiment.
Fig. 7 is a flowchart illustrating an operation example of a network communication unit according to the first embodiment.
Fig. 8 is a flowchart illustrating an operation example of a printing data receiving unit according to the first embodiment.
Fig. 9 is a schematic diagram illustrating a specific operation example when the image forming apparatus performs normal printing according to the first embodiment.
Fig. 10 is a schematic diagram illustrating a specific operation example at the time of operation start when the image forming apparatus performs security printing according to the first embodiment.
Fig. 11 is a schematic diagram illustrating a specific operation example at the time of printing when the image forming apparatus performs security printing according to the first embodiment.
Fig. 12 is a block diagram illustrating a configuration example of the periphery of an image forming apparatus according to a second embodiment.
Fig. 13 is a block diagram illustrating a configuration example of the image forming apparatus and an HC according to the second embodiment.
Fig. 14 is a schematic diagram illustrating a configuration example of a normal printing management table and a preferential printing management table which are included in a communication management table according to the second embodiment.
Fig. 15 is a flowchart illustrating an operation example of a network communication unit according to the second embodiment.
Fig. 16 is a flowchart illustrating an operation example of a printing data receiving unit according to the second embodiment.

### DESCRIPTION

Hereinafter, embodiments according to the present invention will be described with reference to the drawings.

First, a background of embodiments of the present invention will be described.

In security printing, for example, a first user instructs a printer to perform security printing from a first personal computer (PC), and the first user moves towards the printer. The first user inputs authentication information (for example, a password) through an operation panel of the printer. In the security printing, for example, when the authentication information is not input, the printing that the first user instructs is not performed.

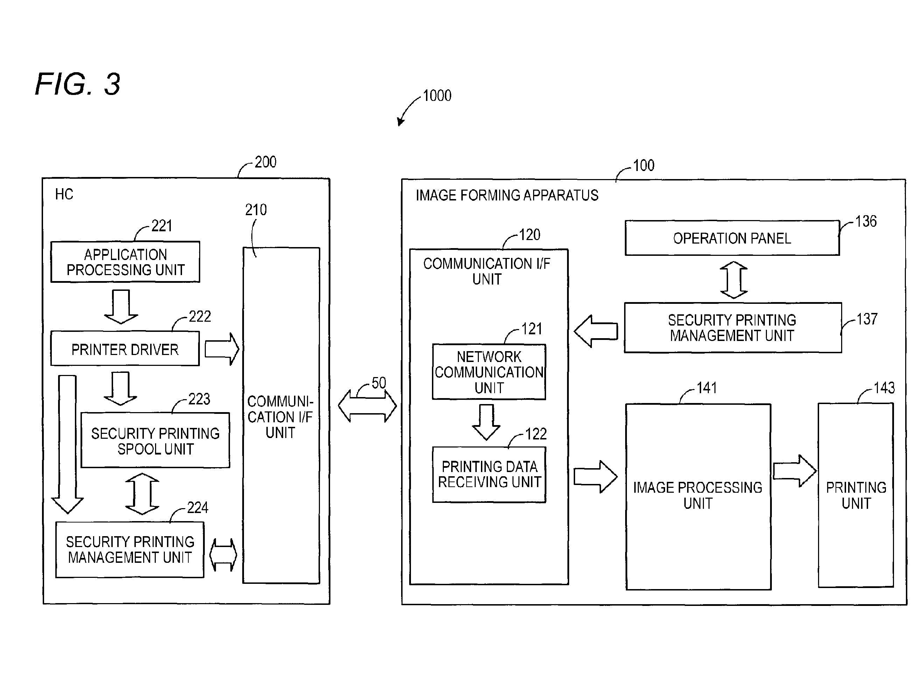

Meanwhile, while the first user inputs the authentication information through the operation panel of the printer, a second user can instruct the printer to print from a second PC. In this case, data corresponding to a printing instruction of the second user is preferentially printed (for example, steps S3, S4, and S5 of Fig. 3 of JP-A-6-183110), and the first user may wait for a long time around the printer. For example, when there are many sheets (for example, 100 or 200 sheets) of printing data of the second user, the first user is required to wait for a long time (for example, 10 minutes or more).

Hereinafter, an image forming apparatus, an image forming system, and an image forming method that can form an image by ensuring security, and that can reduce a waiting time for image forming will be described.

### First Embodiment

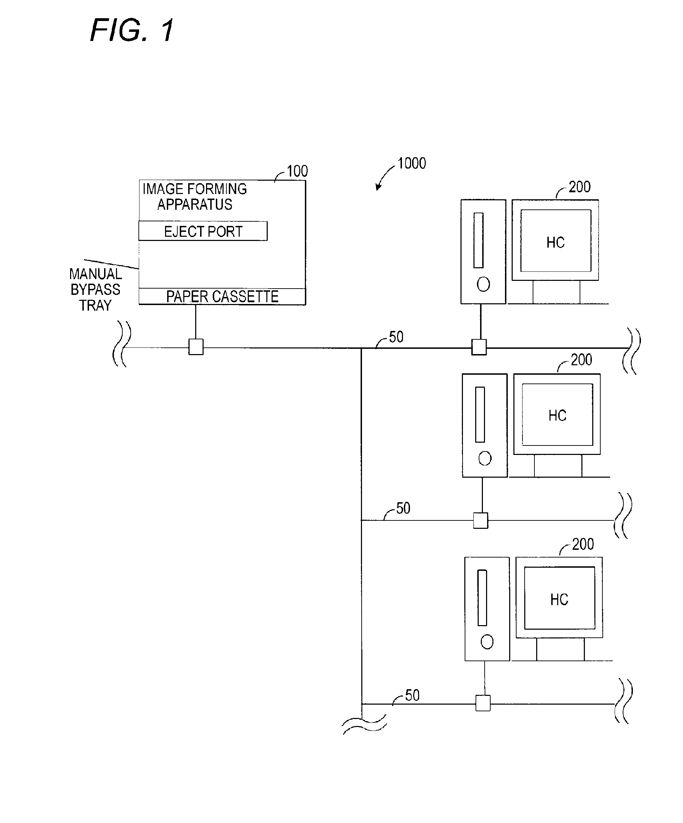

Fig. 1 is a schematic diagram illustrating an external appearance example of an image forming apparatus 100 and HCs 200 according to a first embodiment.

Fig. 1 illustrates that three host computers (HC) 200 are connected to the image forming apparatus 100, but the number of the HCs 200 may be more or less than three. Fig. 1 illustrates that the image forming apparatus 100 and the HCs 200 are connected together through a network 50 in a one-to-multiple manner, but these may be connected in a multiple-to-multiple manner, and may be connected in a one-to-one manner.

The image forming apparatus 100 and the HCs 200 are installed in, for example, an office, a shop, or a house. For example, the image forming apparatus 100 which is installed at a predetermined place is shared with unspecified individual users, and an image forming function (for example, printer function, copy function, facsimile function, image scanner function) is used when needed.

The image forming apparatus 100 includes, for example, a printer, a copy machine, a facsimile, an image scanner, and a multi-function printer (MFP) having such functions. The image forming apparatus 100 forms an image, and prints the formed image on a predetermined medium (for example, paper), or outputs the image using another method.

The HC 200 includes, for example, a PC. The HC 200 is an example of a communication device. The network 50 includes, for example, the local area network (LAN).

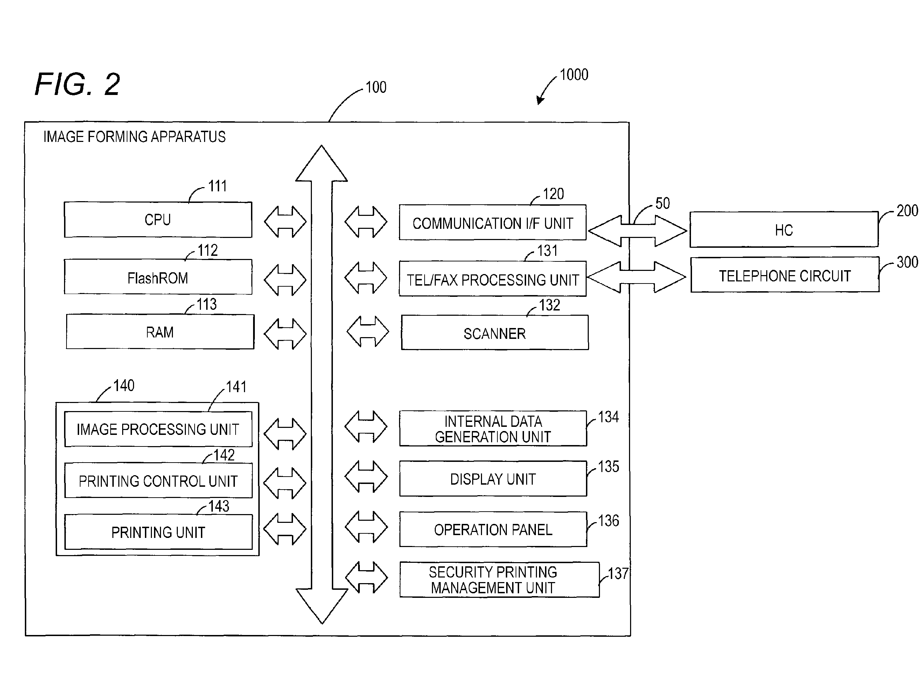

Fig. 2 is a block diagram illustrating a configuration example of the periphery of the image forming apparatus 100 according to the first embodiment. Fig. 3 is a block diagram illustrating a configuration example of the image forming apparatus 100 and the HC 200, according to the first embodiment. An image forming system 1000 includes the image forming apparatus 100 and the HC 200.

The image forming apparatus 100 includes a central processing unit (CPU) 111, a flash read only memory (flash ROM) 112, a random access memory (RAM) 113, a communication I/F unit 120, a TEL/FAX processing unit 131, a scanner 132, an internal data generation unit 134, a display unit 135, an operation panel 136, a security printing management unit 137, and a printing unit 140.

For example, the CPU 111 executes a program which is built therein in advance, thereby performing various functions to control the entire image forming apparatus 100. In Fig. 2, the CPU 111 is mutually connected to each unit through an internal bus.

The flash ROM 112 retains various data (for example, programs for the CPU 111, various and integer data required for control). For example, by the CPU 111, data is written to the flash ROM 112, and the data stored in the flash ROM 112 is read. The data stored in the flash ROM 112 is not erased even when the image forming apparatus 100 is powered off.

The RAM 113 retains various data. For example, by the CPU 111, data is written to the RAM 113, and the data stored in the RAM 113 is read. The data stored in the RAM 113 is erased when the image forming apparatus 100 is powered off. Due to this, for example, the RAM 113 is used as a unit for storing data which is temporarily generated.

The communication I/F unit 120 provides a function to connect the image forming apparatus 100 to other apparatuses (for example, HC 200) through the network 50. As illustrated in Fig. 3, the communication I/F unit 120 includes a network communication unit 121 and a printing data receiving unit 122. The communication I/F unit 120 is an example of a communication processing unit.

The communication I/F unit 120 communicates using, for example, transmission control protocol (TCP) and internet protocol (IP).

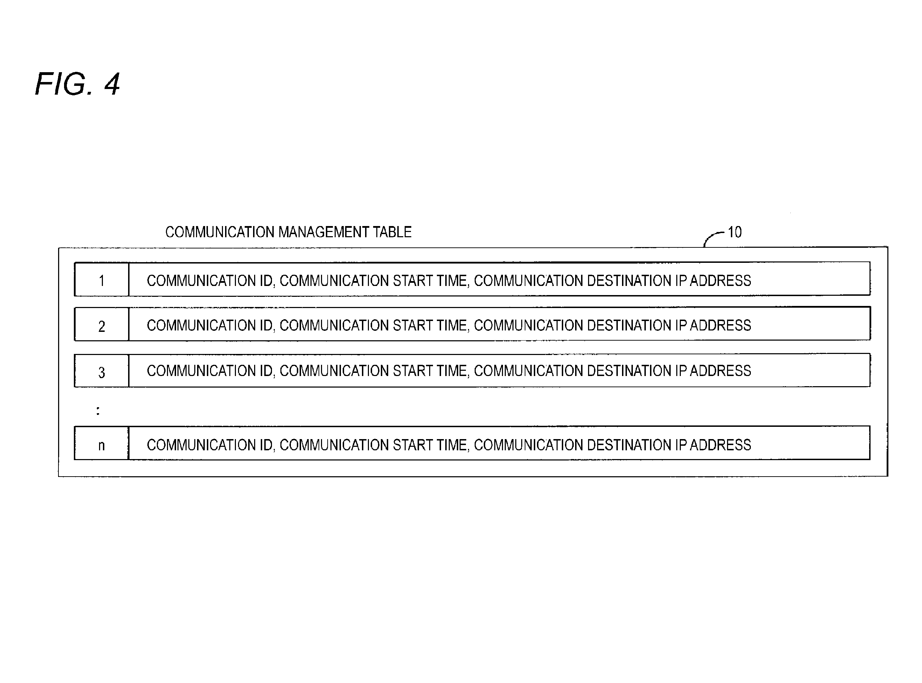

The network communication unit 121 performs a control to manage communication through the network 50. As illustrated in Fig. 4, the printing data receiving unit 122 includes a communication management table 10. For example, when there is a printing request (instruction) from the HC 200, the network communication unit 121 receives the printing request, and establishes a communication session in the network 50, between the image forming apparatus 100 and the HC 200. Information on the session according to the printing request is registered in the communication management table 10. The printing request is an example of an image forming request. The communication management table 10 is an example of an information retention unit.

The printing request includes, for example, a printing request of security printing (an example of a secure image forming request), and a printing request of normal printing (an example of a non-secure image forming request). In the printing request of security printing, the HC 200 requests printing based on a request performed from the image forming apparatus 100 to the HC 200, a communication session is established in the network 50, between the image forming apparatus 100 and the HC 200, and information on the session is registered in the communication management table 10.

The printing data receiving unit 122 receives the body data (printing data) of a printing target from the HC 200, based on registered content of the communication management table 10. The printing data receiving unit 122 receives the printing data through the communication session in the network 50.

The printing data is data required for printing. For example, when the data of a printing target is data of a document, the printing data includes information of characters such as content of characters, a size of characters, a font of characters, a disposed position of characters. The printing data is an example of image forming data for forming an image.

The printing data receiving unit 122 receives the printing data for each communication session and for each print job, but does not receive simultaneously the printing data of multiple communication sessions and multiple print jobs.

A telephone/FAX (TEL/FAX) processing unit 131 provides a telephone (TEL) function or a facsimile (FAX) function that the image forming apparatus 100 has. The telephone/FAX processing unit 131 includes, for example, a MODEM function which modulates or demodulates data being communicated between the image forming apparatus 100 and a telephone circuit 300, and a function to control communication protocol.

For example, the scanner 132 optically reads an image recorded on paper, and generates image data.

The internal data generation unit 134 generates various internal data. For example, the internal data generation unit 134 generates a printing function setting list, a telephone book list, a FAX transmission history, or the like.

The display unit 135 includes, for example, a liquid crystal display, and includes a screen which can display visible information (for example, characters, symbols, images). The display unit 135 is an example of a presenting unit.

The operation panel 136 includes buttons and keys which can receive an input operation by a user. The operation panel 136 includes, for example, numeric keys through which the user inputs a passcode or a password, cursor keys through which the HC 200 that is a printing request source or a print job of a printing target is selected, an enter key, and a security printing key. Buttons and keys of the operation panel 136 may be buttons formed by hardware or may be buttons implemented by software. The operation panel 136 is an example of an operation unit.

A security printing key is a key for instructing a secure printing start. If the security printing key is operated (pressed), setting of security printing (secure print) is started by, for example, the security printing management unit 137, and reception of printing data is limited (for example, waiting state) by the printing data receiving unit 122. An operation of the security printing key is an example of a start operation of secure image forming.

The security printing management unit 137 cooperates with the security printing management unit 224 of the HC 200, and manages security printing. For example, based on the operation of the operation panel 136, the security printing management unit 137 selects the HC 200 having the security printing management unit 224, and performs authentication processing for authenticating a user. The security printing management unit 137 is an example of a security management unit.

The printing unit 140 includes an image processing unit 141, a printing control unit 142, and a printing unit 143. The printing unit 140 is an example of an image forming unit.

The image processing unit 141 includes an engine which processes printing data. The processing of printing data includes processing of, for example, interpretation of print words, and rasterizing. For example, the image processing unit 141 develops the printing data received by the printing data receiving unit 122, and converts the received data into bit map data corresponding to an image to be printed. For example, the image processing unit 141 extracts various control codes or character codes from the printing data generated according to a format which is determined in advance, and decodes the extracted codes. For example, the image processing unit 141 performs processing of alignment, rotation, enlargement, and reduction of an image, according to the control code. For example, the image processing unit 141 develops a character code in a related character pattern, and generates the printing data for printing.

The printing unit 143 receives the image data for printing generated by the image processing unit 141, and prints the image data on a predetermined medium (for example, paper). The printing method performed by the printing unit 143 includes various known methods.

For example, the printing unit 143 charges in advance each area of a photoreceptor formed in a drum shape. The printing unit 143 outputs or blocks an output of a laser light source, according to data of each pixel position of an image to be printed. The printing unit 143 writes on each area of the photoreceptor using laser light in accord with a rotation position of the photoreceptor and a scan position of the laser light source, and thus, absorbs toner onto an electrostatic latent image which is formed on a surface of the photoreceptor, and visualizes a latent image using the toner. For example, the printing unit 143 overlays paper on a surface of the photoreceptor, transfers a toner image of the photoreceptor on the paper, and fixes the image.

The printing control unit 142 controls printing performed by the printing unit 143. The printing control unit 142 controls timings for controlling each unit according to printing, and ON and OFF of each unit, in such a manner that, for example, the rotation position of a photoreceptor, the scan position of a laser light source, and each pixel position correspond to each other. The printing control unit 142 controls, for example, paper feeding, and transfer and fixing of an image.

Next, a configuration of the HC 200 will be described.

The HC 200 includes an application processing unit 221, a printer driver 222, a security printing spool unit 223, a security printing management unit 224, and a communication I/F unit 210. While not being illustrated in Figs. 2 and 3, the HC 200 includes, for example, a CPU, hardware including a storage unit, and an operating system (OS) which executes a basic control. The OS has a function to spool the printing data of normal printing.

The I/F unit 210 provides a communication function to connect the HC 200 to the network 50. The HC 200 is connected to the image forming apparatus 100 through the communication I/F unit 210 and the network 50. For example, the communication I/F unit 210 transmits a printing request and printing data corresponding to the printing request, and controls transmission of the printing data. The printing data is transmitted according to a transmission request from the image forming apparatus 100.

The application processing unit 221 processes various applications (programs). Various applications include, for example, an application that generates a document and an image. For example, when a printing application is executed, the application processing unit 221 transfers the data of a printing target to the printer driver 222.

The printer driver 222 performs a control of printing, between the HC 200 and the image forming apparatus 100. For example, the printer driver 222 generates printing data from the data of a printing target.

For example, the security printing spool unit 223 temporarily stores (spools) the printing data of security printing which is output from the printer driver 222.

The security printing management unit 224 cooperates with the security printing management unit 137 of the image forming apparatus 100, and manages security printing. For example, the normal printing of the security printing is designated through the operation unit (not illustrated) of the HC 200. The security printing management unit 224 receives information on the security printing through the printer driver 222.

The security printing management unit 224 retains, for example, authentication information (for example, passcode or password) allocated to a user, and identification information (for example, IP address, media access control (MAC) address) allocated to the HC 200. The security printing management unit 224 communicates with the image forming apparatus 100, and may transmit the information (for example, authentication information, identification information of the HC 200) stored in the security printing management unit 224.

The security printing management unit 224 retains information of a print job according to the printing request. The information of a print job includes, for example, information of a file name including data of a printing target, and information (an example of communication start time) of a time when security printing is requested.

Next, a configuration example of the communication management table 10 will be described.

Fig. 4 is a schematic diagram illustrating a configuration example of the communication management table 10 according to the first embodiment. For example, the communication management table 10 is included in the network communication unit 121 of the image forming apparatus 100.

In the image forming apparatus 100, if network communication starts for a printing request from the HC 200, the network communication unit 121 establishes a session in the network 50, with respect to the HC 200, enters a state where the printing request can be received, and registers at least a portion of the information of the session in the communication management table 10. Here, the session establishment, for example, in a case of TCP, means that a three way handshake is successful, and means a case where a bi-directional data transfer can be performed.

The communication management table 10 includes multiple (n pieces in Fig. 4) storage areas. The information stored in the communication management table 10 includes, for example, information on a communication ID, a communication start time, and a communication destination IP address.

For example, as the communication ID, a separate (unique) number to distinguish each communication is provided.

For example, information on the communication start time includes information indicating the time that the HC 200 which is a printing request source transmits a printing request, the time that the image forming apparatus 100 which is a printing request destination receives the printing request, or the time at which a communication session is established between the image forming apparatus 100 and the HC 200.

For example, the communication destination IP address includes an IP address allocated to the HC 200 that transmits the printing request.

Based on the session information stored in the communication management table 10, the image forming apparatus 100 sequentially receives data with reference to the content of each area sequentially towards the last area from the first area of the communication management table 10, in the printing data receiving unit 122, thereby processing each print job.

If the security printing keys of the operation panel 136 are operated, and the print job of security printing is selected, the network communication unit 121 requests transmission of the printing data with respect to the HC 200 which spools the selected print job, and the security printing management unit 137 instructs the printing data receiving unit 122 to perform priority processing of the HC 200. At this time, the printing data receiving unit 122 temporarily stops referring according to a sequence of the communication management table 10, and starts referring to only specified session information of the HC 200. If the session information of the HC 200 is registered, the printing data receiving unit 122 receives data with reference to content thereof, and preferentially processes the print job of the HC 200.

When printing according to the print job, session information of which is stored in the communication management table 10, is ended or stopped, the session information corresponding to the print job, printing of which is ended or stopped, is removed from the communication management table 10.

Next, an operation sequence of the security printing will be described.

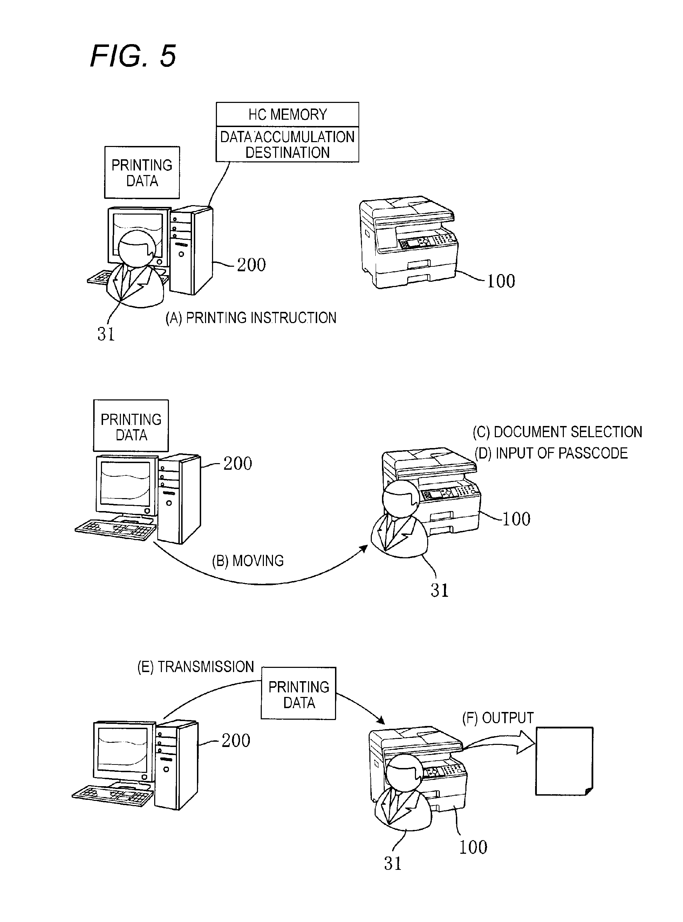

Fig. 5 is a state transition diagram illustrating an example of an operation sequence at the time of performing the security printing in the image forming system 1000 according to the first embodiment. In Fig. 5, the security printing is performed according to the following operation sequence.
(A) For example, a user 31 of the HC 200 operates an operation unit of the HC 200, and inputs an instruction for the security printing. In addition, for example, a storage unit of the HC 200 retains a passcode determined in advance, according to the operation with respect to the operation unit of the HC 200.
   According to a request for security printing generated in the HC 200, the HC 200 temporarily spools printing data of security printing, and according to a request from the image forming apparatus 100, transmits the printing data of security printing to the image forming apparatus 100.
(B) For example, in the security printing, various information items are input, with respect to the operation panel 136 of the image forming apparatus 100. For this reason, after the HC 200 instructs the security printing, the user 31 moves to a place where the image forming apparatus 100 is installed.
   If the user 31 moves to the place where the image forming apparatus 100 is installed, the user 31 operates (presses) the security printing key through the operation panel 136. As a result, reception of the printing data of other printing targets is temporarily stopped (suspended). In this state, the user 31 inputs, for example, a passcode through the operation panel 136.
(C) The user 31 operates the operation panel 136 of the image forming apparatus 100. The operation panel 136 receives the operation to select a document (print job) of one or more security printing targets. In this case, for example, a selectable document is a document for which a security printing request has previously been received from the HC 200 that the user 31 operated or other HCs 200, and is a document for which printing has not yet been performed or printing is not stopped. The document is an example of the data of a printing target.
(D) The user 31 operates the operation panel 136 of the image forming apparatus 100. A passcode for security-printing the document of the printing target of the security printing is input through the operation panel 136. The image forming apparatus 100 performs authentication processing using the passcode which is input to the operation panel 136. When authentication is successfully performed, the image forming apparatus 100 makes a request of transmission of printing data to the HC 200.
   In addition, the selection of the document in the sequence (C) and the input of the passcode in the sequence (D) may be reversed in their sequence.
(E) When the HC 200 receives a transmission request for the printing data of a printing target from the image forming apparatus 100, the HC 200 transmits the printing data of the printing target to the image forming apparatus 100.
(F) The image forming apparatus 100 receives the printing data of the printing target from the HC 200, and forms an image from the printing data, for example, prints (outputs) on paper.

According to an operation sequence of Fig. 5, until the user 31 inputs a predetermined authentication information (for example, passcode or password) at the image forming apparatus 100, image forming (for example, printing) is not performed by the image forming apparatus 100, and thus, security can be ensured. In addition, since reception of other printing data is stopped by operating security printing keys, it is possible to prevent that other printing is performed although being interrupted. Thus, it is possible to reduce the time that the user 31 waits at the image forming apparatus 100 until printing is ended.

Next, an example of operations of each unit of the image forming apparatus 100 will be described.

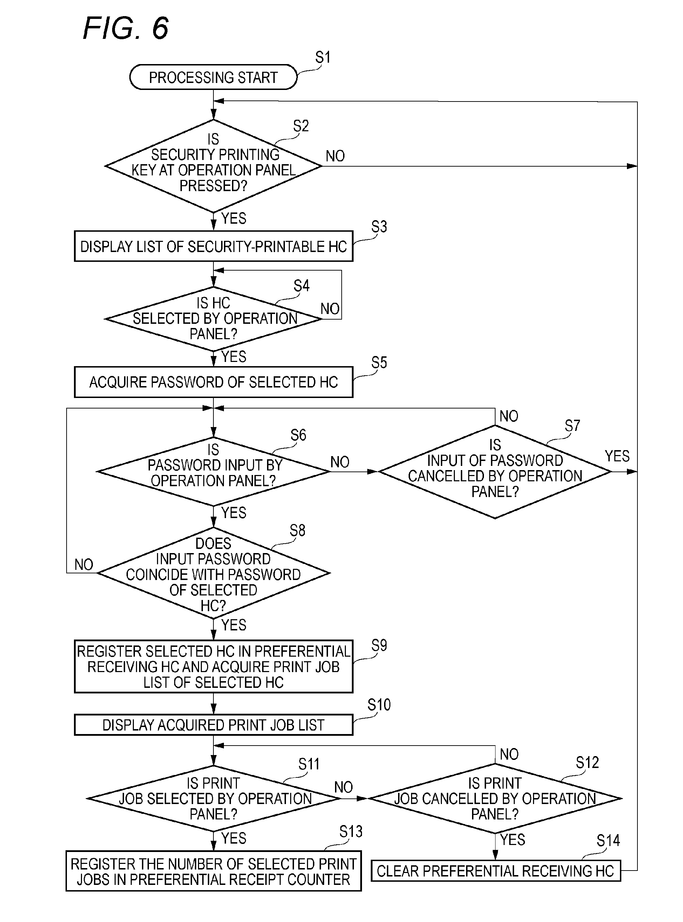

Fig. 6 is a flowchart illustrating an operation example of the security printing management unit 137, according to the first embodiment. When processing is started by the security printing management unit 137 (step S1), the following processing is performed. The processing performed by the security printing management unit 137 is performed regularly.

In Fig. 6, between the image forming apparatus 100 and the HC 200, that is, in cooperation with the security printing management unit 137 and the security printing management unit 224, data communication is performed using user datagram protocol (UDP). That is, in steps of Fig. 6, a communication session is not established.

The security printing management unit 137 monitors the state of the operation panel 136, and determines whether or not the security printing keys are pressed (step S2). For example, before the data (for example, document) of the printing target in the sequence (C) illustrated in Fig. 5 is selected, whether or not the security printing keys are pressed is determined.

When the security printing key is pressed, the security printing management unit 137 displays HCs 200 which can perform security printing, on the screen of the display unit 135 (step S3).

For example, the security printing management unit 137 transmits predetermined information to make an inquiry to the HC 200 connected to the network 50. The security printing management unit 137 determines whether or not the security printing management unit 224 exists in the HC 200, with reference to a response with respect to the predetermined information from each HC 200.

The security printing management unit 137 determines the HC 200 having the security printing management unit 224 as an HC 200 which can perform security printing, and determines the HC 200 having no security printing management unit 224 as an HC 200 which cannot perform security printing. Only the HC 200 which can perform security printing is listed on the screen of the display unit 135.

Thus, when operating the image forming apparatus 100, the user (hereinafter, referred to as user A) who instructs security printing to the HC 200 can easily confirm the information of the HC 200 of the user A, from the list.

The security printing management unit 137 monitors the state of the operation panel 136, and determines whether or not the HC 200 which requests the security printing is selected (step S4). The user A selects one HC 200 among the HCs 200 listed on the screen of the display unit 135, using the operation panel 136. Depending on the result of selection of the HC 200, the security printing management unit 137 specifies a security printing request source.

The security printing management unit 137 makes an inquiry to the selected HC 200, and acquires authentication information (for example, passcode or password) stored in the security printing management unit 224 of the HC 200 (step S5). Here, a case where authentication information is a password is exemplified.

The security printing management unit 137 monitors the state of the operation panel 136, and determines whether or not there is an input of a password performed by the user A (step S6). When there is no input of a password, the security printing management unit 137 monitors the state of the operation panel 136, and determines whether or not a cancel operation is detected (step S7). When the cancel operation is not detected, the processing proceeds to step S6, and when the cancel operation is detected, the processing proceeds to step S2.

The security printing management unit 137 compares the password acquired in step S5 with the password input in step S6, and determines whether or not the two passwords match with each other (user authentication).

When the two passwords match with each other in step S8, the security printing management unit 137 sets the HC 200 selected in step S4 as "preferential receiving HC", for example, information of the preferential receiving HC being registered in an internal memory of the security printing management unit 137 (step S9). The information of the preferential receiving HC includes, for example, an IP address of an HC 200 and a MAC address. The information of the preferential receiving HC is acquired from the security printing management unit 137 of the HC 200, for example.

As a result, in a case of using the common HC 200, an input of password is completed only once. Thus, for example, when the same user A performs multiple printing requests, it is not necessary to perform an input of a password whenever there is printing, and it is possible to improve operability while maintaining the security.

The security printing management unit 137 communicates with the security printing management unit 224 of the selected HC 200, and acquires a print job list of the security printing (step S9). There may be one or more print jobs of the print job list.

The security printing management unit 137 displays a list of the print jobs acquired from the HC 200 in step S9 on the screen of the display unit 135 (step S10). The print jobs of the print job list displayed in the display unit 135 are selectable by the user A through the operation panel 136.

The security printing management unit 137 monitors the state of the operation panel 136, and determines which print job of the displayed print jobs is selected (step S11).

The security printing management unit 137 registers the number of the selected print jobs in step S11 in a "preferential receipt counter" stored in an internal memory of the security printing management unit 137, for example (step S13).

The security printing management unit 137 monitors the state of the operation panel 136, and determines whether or not a cancel operation is detected (step S12). When the cancel operation is detected, the processing proceeds to step S11.

When the cancel operation is detected, the security printing management unit 137 clears the information of the preferential receiving HC (step S14). After the processing of step S14, the processing proceeds to step S2.

According to the operation example of the security printing management unit 137, by triggering the operation of the security printing keys, processing (for example, information registering to preferential receiving HC, information registering to preferential receipt counter) of a preparation step for the security printing can be performed.

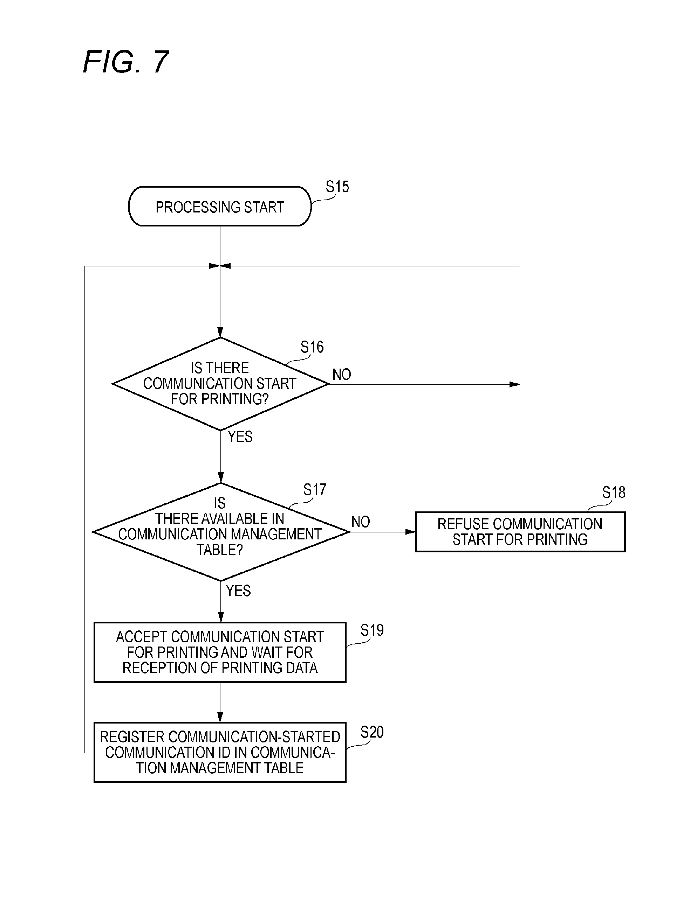

While not being illustrated, the image forming apparatus 100 requests transmission of printing data with respect to the selected HC 200 in step S5, after the operation illustrated in Fig. 6, and before the operation illustrated in Fig. 7. The HC 200 which receives a request for the transmission of printing data starts network communication in order to perform a printing request to the image forming apparatus 100. In the image forming apparatus 100, the network communication unit 121 establishes a communication session in the network 50, between the image forming apparatus 100 and the HC 200, and information on the session is registered in the communication management table 10 in the later processing.

Fig. 7 is a flowchart illustrating the operation example of the network communication unit 121 according to the first embodiment. If the processing is started by the network communication unit 121 (step S15), the following processing is performed. The processing performed by the network communication unit 121 is started after the operation illustrated in Fig. 6, for example.

The network communication unit 121 determines whether or not there is a communication start for printing (step S16). For example, the network communication unit 121 determines whether or not there is a communication start, with reference to information (for example, a port number) on a port which is allocated for printing. In addition, when the preferential receipt counter indicates one or more, the network communication unit 121 determines that there is a communication start.

When there is a communication start for printing, the network communication unit 121 determines whether or not there is an available area in the communication management table 10 (step S17). When there is no available area, the network communication unit 121 refuses the communication start for printing (step S18), and proceeds to step S16. That is, the network communication unit 121 waits until an available area is secured in the communication management table 10.

When an available area is secured in the communication management table 10, the network communication unit 121 accepts the request of communication start for printing from the HC 200 (step S19). In step S19, reception of the printing data is in a waiting (suspending) state, and the printing data is not received.

The network communication unit 121 registers a communication ID of the HC 200 which receives the communication start for printing in an available area of the communication management table 10 (step S20). As a result, it is possible to confirm that there exists an HC 200 waiting for printing, by using, for example, display of the display unit 135. Not only the communication ID but also other information (for example, information illustrated in Fig. 4) may be registered in the communication management table 10.

According to the operation example of the network communication unit 121, it is possible to perform processing (for example, establishing processing of communication session, registering processing to the communication management table 10) of a preparation step in order to receive the printing data.

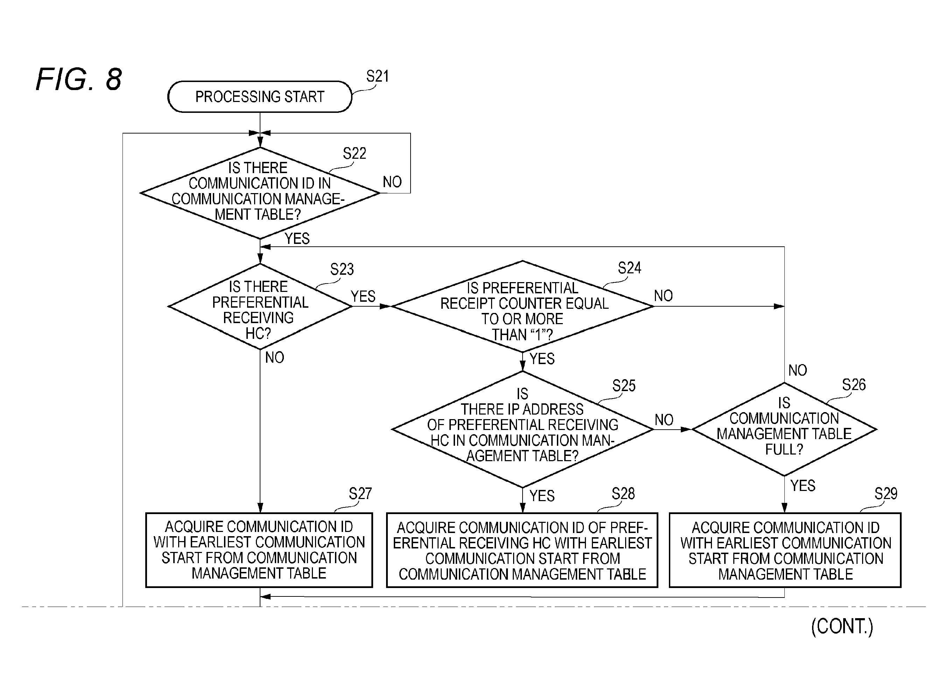

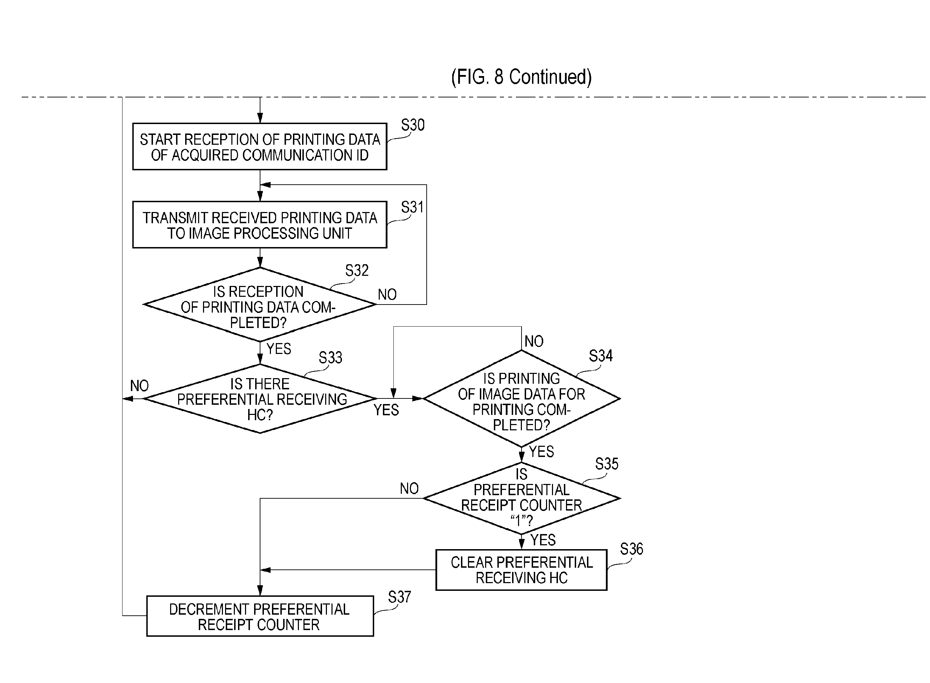

Fig. 8 is a flowchart illustrating an operation example of the printing data receiving unit 122 according to the first embodiment. If the processing is started by the printing data receiving unit 122 (step S21), the following processing is performed. The processing performed by the printing data receiving unit 122 is started asynchronously with respect to the operation illustrated in Fig. 7, for example.

The printing data receiving unit 122 determines whether or not an HC 200 waiting for printing exists, with reference to the communication management table 10 (step S22). For example, when a communication ID is registered in the communication management table 10, the printing data receiving unit 122 determines that an HC 200 waiting for printing exists.

When an HC 200 waiting for printing exists, the printing data receiving unit 122 determines presence or absence of a preferential receiving HC, with reference to the security printing management unit 137 (step S23).

When a preferential receiving HC exists, the printing data receiving unit 122 acquires a communication ID with the earliest communication start time corresponding to the communication ID among the communication IDs which are stored in the communication management table 10 (step S27). This communication ID is a communication ID according to the printing request of the normal printing.

When the preferential receiving HC exists, the printing data receiving unit 122 determines whether or not the value of the preferential receipt counter indicates less or more than "1", with reference to the preferential receipt counter (step S24). When the value of the preferential receipt counter indicates less than "1", the processing proceeds to step S23.

When the preferential receipt counter indicates "1" or more, the printing data receiving unit 122 determines whether or not an IP address (IP address of preferential receiving HC) included in the information of the preferential receiving HC exists in the communication management table 10 (step S25).

When the IP address of the preferential receiving HC exists in the communication management table 10, the printing data receiving unit 122 acquires the communication ID with the earliest communication start time corresponding to the ID address among the IP address of the preferential receipt HC which are stored in the communication management table 10 (step S28).

When the communication ID of the preferential receiving HC does not exist in the communication management table 10, the printing data receiving unit 122 determines whether or not there is a state where there is no available area in the communication management table 10 (full state) (step S26). When the communication management table 10 is not full, the processing proceeds to step S23.

When the communication management table 10 is in a full state, the printing data receiving unit 122 acquires the communication ID with the earliest communication start time corresponding to the communication ID among the communication IDs which are stored in the communication management table 10 (step S29). A communication ID which is acquired in step S29 is, for example, a communication ID according to the security printing or a communication ID according to the normal printing.

In step S26, determining whether or not there is no available area in the communication management table 10 is exemplified, but whether or not there is an available area larger than a predetermined amount may be determined. When the available area of the communication management table 10 is equal to or larger than a predetermined amount, the processing proceeds to step S23, and when the available area of the communication management table 10 is smaller than a predetermined amount, the processing proceeds to step S29.

The printing data receiving unit 122 makes a request to the HC 200 to transmit the printing data, for the print job of the communication ID which is acquired from any one of the processing tasks of steps S27 to S29, and starts reception of the printing data (step S30). In this case, the HC 200 which instructs the print job starts the transmission of the printing data of the security printing which is spooled in the security printing spool unit 223, or the printing data of the normal printing which is spooled in the OS, to the image forming apparatus 100. For example, the printing data is transferred through the communication session which is formed between the image forming apparatus 100 and the HC 200.

The printing data receiving unit 122 transfers the printing data from the HC 200 to the image processing unit 141 (step S31). The image processing unit 141 generates image data for printing based on the printing data.

The printing data receiving unit 122 determines whether or not reception of all the printing data of the print job of the printing target is completed (step S32). When reception of the printing data is not completed, the processing proceeds to step S31.

When reception of the printing data is completed, the printing data receiving unit 122 determines presence or absence of the preferential receiving HC (step S33). When the preferential receiving HC does not exist, the processing proceeds to step S22.

When the preferential receiving HC exists, the printing data receiving unit 122 determines whether or not printing of the image data performed by the printing unit 143 is completed (step S34). When printing of the image data is not completed, the processing of step S34 is repeated.

The printing data receiving unit 122 determines whether or not the value of the preferential receipt counter indicates "1", with reference to the preferential receipt counter which is stored in the security printing management unit 137 (step S35). When the preferential receipt counter indicates "1", the printing data receiving unit 122 clears the information of the preferential receiving HC (step S36), and sets a state where the preferential receiving HC does not exist.

When the preferential receipt counter indicates "1" or more in step S35, or when the information of the preferential receiving HC is cleared in step S36, the printing data receiving unit 122 decrements the preferential receipt counter (step S37). As a result, for example, through the display unit 135, it is possible to confirm that the number of print jobs for which the security printing is suspended has reduced. After the processing of step S37, the processing proceeds to step S22.

According to the operation example of the printing data receiving unit 122, by using the information of the preferential receiving HC and the information of the preferential receipt counter which are registered by the security printing management unit 137, and the information of the communication management table 10 which is registered by the network communication unit 121, the print job of the printing target can be extracted.

In addition, it is possible to receive the printing data relating to a print job of the printing target from the HC 200. At the timing of receiving the printing data, the user A is located at the image forming apparatus 100, and thus, if printing of the image data according to the printing data of the user A is ended, the printed materials can be immediately collected. Thus, it is possible to decrease a possibility that other people may look over the printed materials, and to ensure security.

In addition, when the print job of the security printing exists, the information of the preferential receiving HC exists, the processing proceeds to step S24 from step S23, the processing does not proceed to step S27 from step S23, and thus, the print job of the normal printing is not selected as the printing target. Thus, there is little possibility of the user A who requests the security printing waiting for completion of another normal printing at the image forming apparatus 100, thereby reducing a waiting time for printing (an example of waiting time for image forming).

In addition, by acquiring the communication ID of step S29, it is possible to execute the print job of the communication ID with the earliest communication start time, to secure an available area in the communication management table 10, and to accept another print job (for example, print job of security printing). As a result, when there is heavy processing due to many requests, it is possible for the communication management table 10 to preferentially accept the print job of the security printing, and to reduce a waiting time of the user A for printing.

Next, when the image forming apparatus 100 prints, a flow of data will be described.

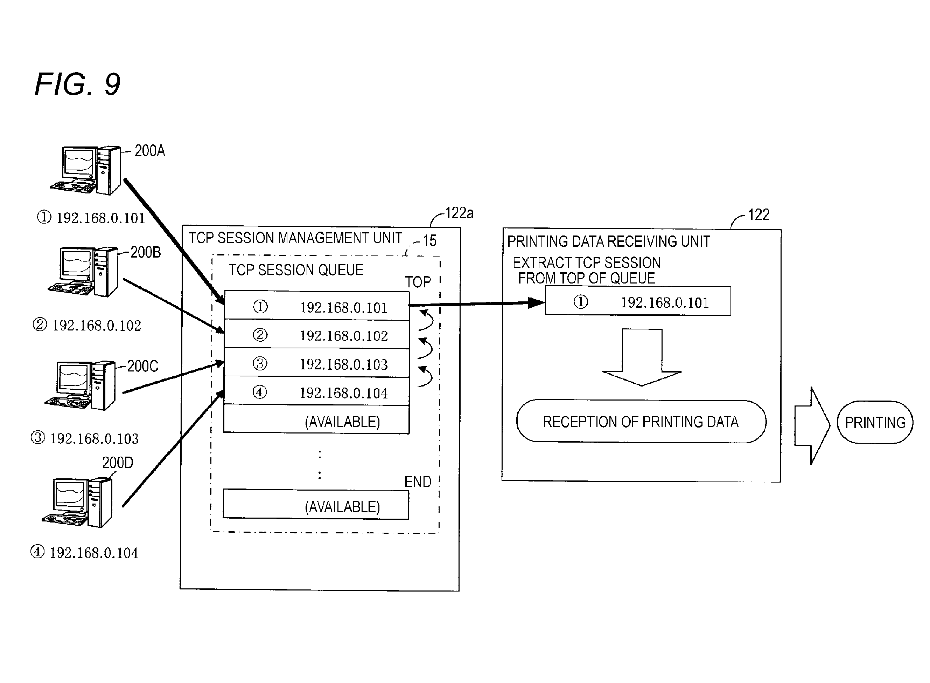

Fig. 9 is a schematic diagram illustrating a specific operation example when the image forming apparatus 100 performs a normal printing, according to the first embodiment.

It is assumed that in Fig. 9, four HCs 200A, 200B, 200C, and 200D are connected to the image forming apparatus 100 through the network 50. In Fig. 9, there are four HCs 200, but there may be three or less or five or more. The HCs 200A to 200D are an example of the HC 200.

The printing data receiving unit 122 includes, for example, a TCP session management unit 122a. The TCP session management unit 122a is an example of the communication management table 10, and includes a TCP session queue 15.

For example, the following IP addresses are assigned to the four HCs 200A to 200D.
HC200A: 192.168.0.101
HC200B: 192.168.0.102
HC200C: 192.168.0.103
HC200D: 192.168.0.104

It is assumed that in Fig. 9, the HCs 200A to 200D request the normal printing with respect to the image forming apparatus 100. For example, in the TCP session queue 15, the IP addresses of the HCs 200A to 200D are registered as the information of the TCP session. In addition, in the TCP session queue 15, information other than the IP address may be stored so as to correspond to the IP addresses. For example, the information other than the IP address includes the information stored in the communication management table 10 illustrated in Fig. 4.

In Fig. 9, for example, the print jobs are processed according to the sequence of the queue. Thus, the printing data receiving unit 122 first acquires the information (IP address, herein) of the TCP session for the HC 200A, which is stored in a top area of the TCP session queue 15. Based on the information of the TCP session, the printing data receiving unit 122 receives the printing data from the HC 200A through the TCP session for the HC 200A. Based on the received printing data, the printing unit 143 forms an image for each page, and prints the image on the paper.

For example, the image forming apparatus 100 may not process the print jobs according to the sequence of the queue, and instead, may process each print job at an arbitrary time.

If the information of the TCP session stored in the top area of the TCP session queue 15 is acquired by the printing data receiving unit 122, the information (information of print job) of the acquired TCP session is erased. Then, pieces of information of the TCP session stored in a subsequent area in the TCP session queue 15 moves to an area on the top side one by one.

When the TCP session management unit 122a receives a printing request from another HC 200 whose IP address is not stored in the TCP session queue 15, the IP address of another HC 200 is registered in an available area of the TCP session queue 15 (corresponding to steps S17, S19, and S20 of Fig. 7).

Each HC 200 which issues a printing request with respect to the image forming apparatus 100 waits for transmission of the printing data until the image forming apparatus 100 starts reception of the printing data corresponding to the printing request, even if the information of the print job according to the printing request is registered in the TCP session queue 15. In a transmission waiting state, the printing data of the security printing of the transmission target is stored in the security printing spool unit 223, and the printing data of the normal printing is stored on the OS.

According to the operation example illustrated in Fig. 9, when there is a printing request only of the normal printing, it is possible to execute the print jobs according to a predetermined sequence (for example, sequentially from the top of the queue).

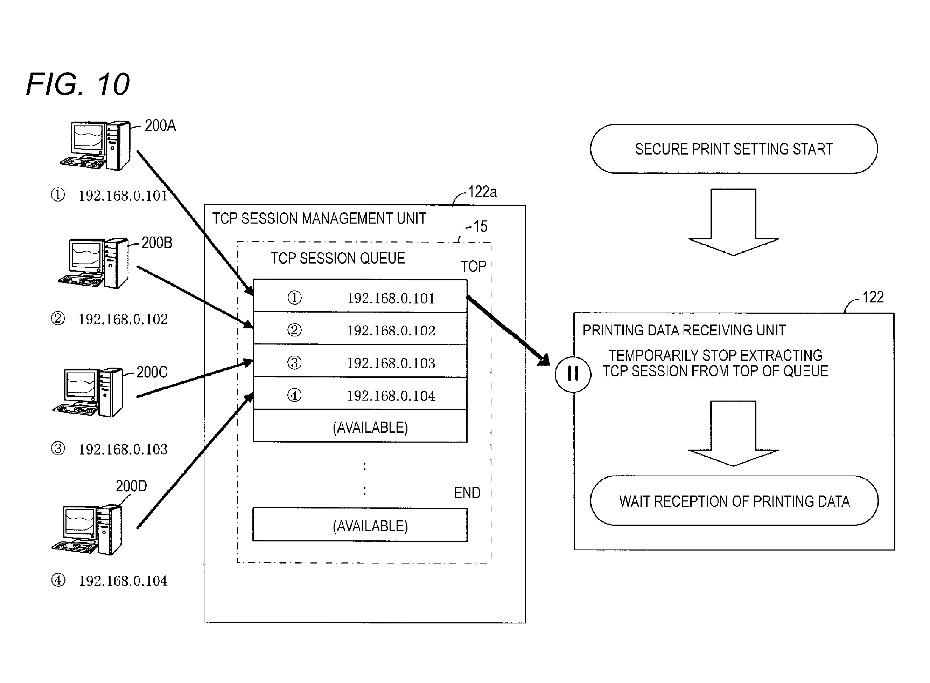

Fig. 10 is a schematic diagram illustrating a specific operation example at the time of operation start when the image forming apparatus 100 performs the security printing, according to the first embodiment.

In Fig. 10, in the same manner as in Fig. 9, the IP addresses of the four HCs 200A to 200D are stored in the TCP session queue 15. The printing data receiving unit 122 first attempts to acquire the information (IP address, herein) of the TCP session stored in the top area of the TCP session queue 15. When the operation panel 136 accepts pressing of the security printing key at this time, the printing data receiving unit 122 starts secure printing setting, and temporarily stops acquisition of the information of the TCP session from the TCP session queue 15. Thus, the printing data receiving unit 122 waits for reception of the printing data from the HC 200A.

In addition, if the information of the TCP session is transmitted to the printing data receiving unit 122 before the security printing key is pressed, the printing data is received through this TCP session even after the security key is pressed. Then, the image data for printing is generated based on the printing data, and the image data is printed.

For example, if the preferential receiving HC is registered in step S9 of Fig. 6 after the sequence (D) illustrated in Fig. 5 is performed, it is determined that the preferential receiving HC exists in step S23 of Fig. 8. Thus, the printing data receiving unit 122 temporarily stops (suspends) reception of the printing data using a TCP session with relatively low priority, that is, a TCP session according to the normal printing.

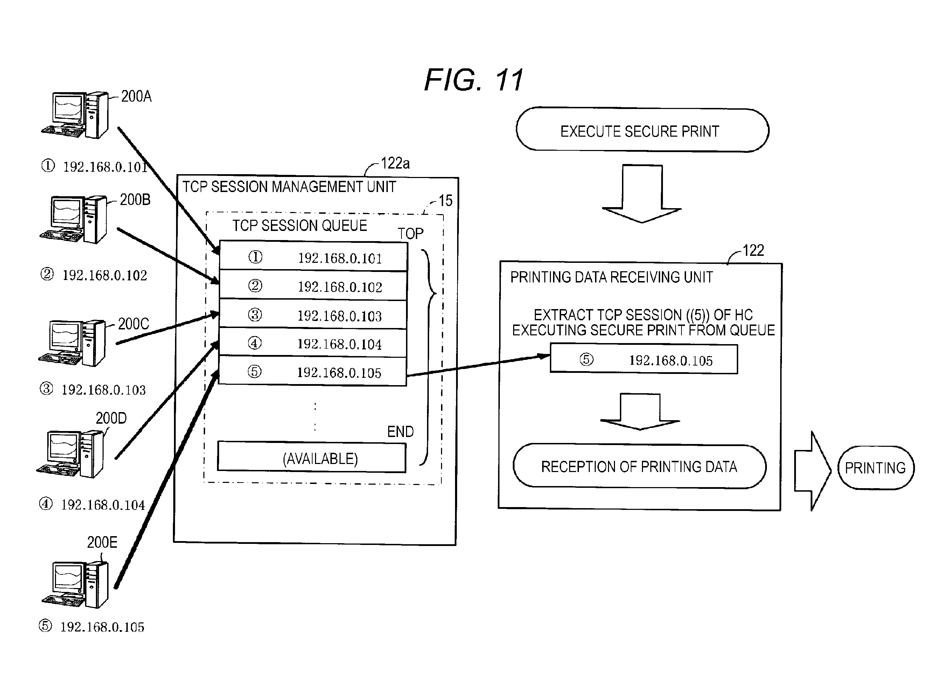

Fig. 11 is a schematic diagram illustrating a specific operation example at the time of printing when the image forming apparatus 100 performs the security printing, according to the first embodiment.

In Fig. 11, a case where a fifth HC 200E requests the security printing, from a state of Fig. 10, that is, a state where the IP addresses of the four HCs 200A to 200D are stored in the TCP session queue 15, is assumed. For example, in the image forming apparatus 100, if a user of the HC 200E inputs a passcode, the operation panel 136 accepts the information of the passcode (corresponding to the sequence (D) of Fig. 5).

The security printing management unit 137 performs the processing of Fig. 6, and registers the HC 200E as the preferential receiving HC. In the image forming apparatus 100, if the user of the HC 200E selects the print job, the operation panel 136 accepts an input of the selected print job. The TCP session management unit 122a requests the printing request of the selected print job with respect to the HC 200E. At this time, data text is not received.

In this case, the TCP session management unit 122a forms a TCP session for the HC 200E, and registers the information (for example, IP address) of the TCP session in an available area (a fifth area from top, herein) of the TCP session queue 15.

In Fig. 11, since the HC 200E which requests the security printing is registered as a preferential receiving HC, the printing data receiving unit 122 performs steps S23, S24, S25, and S28 of Fig. 8. In step S28, the printing data receiving unit 122 searches for the communication ID included in the information of the preferential receiving HC, in the TCP session queue 15, and acquires the information of the TCP session of the HC 200E, and preferentially processes the print job according to this TCP session.

Specifically, the printing data receiving unit 122 starts reception of the printing data from the HC 200E, through the HC 200E and the TCP session. The processing with regard to the TCP session (for example, TCP session for the HC 200A), which is stored prior to the information of the session for the HC 200E, in the TCP session queue 15, is stopped temporarily according to the secure printing setting, as illustrated in Fig. 10. Thus, in the printing data receiving unit 122, interruption of the reception of the printing data from devices other than the preferential receiving HC (HC 200A, herein) does not occur.

According to the operation examples of Figs. 10 and 11, with a start of the secure printing setting, reception of the printing data performed by the printing data receiving unit 122 is stopped (suspended). Thus, it is possible that the user who requests the security printing may wait for a long time at the image forming apparatus 100.

According to the image forming apparatus 100, the print job whose printing is requested by another user is interrupted, for example, according to pressing of the security printing key, and outputting a formed image can be prevented. Thus, it is possible to reduce a waiting time for printing of the user who operates the security printing key. In addition, it is possible to perform printing in a state where safety is ensured, in the security printing.

In addition, when communication for printing starts between the image forming apparatus 100 and the HC 200, the image forming apparatus 100 first establishes a TCP session, and thereafter, requests printing data from the HC 200, and transmits the printing data through the TCP session. Thus, when being in a state of waiting for printing, the printing data is not received, and thereby it is possible to increase a remaining capacity of a storage device of the image forming apparatus 100. Alternatively, when being in a state of waiting for printing, the printing data is not received, and thereby the storage device may be not installed in the image forming apparatus 100, or it is possible to miniaturize the storage device, and to reduce a cost. When the storage device is not installed in the image forming apparatus 100, it is possible to miniaturize the image forming apparatus 100 itself.

### Second Embodiment

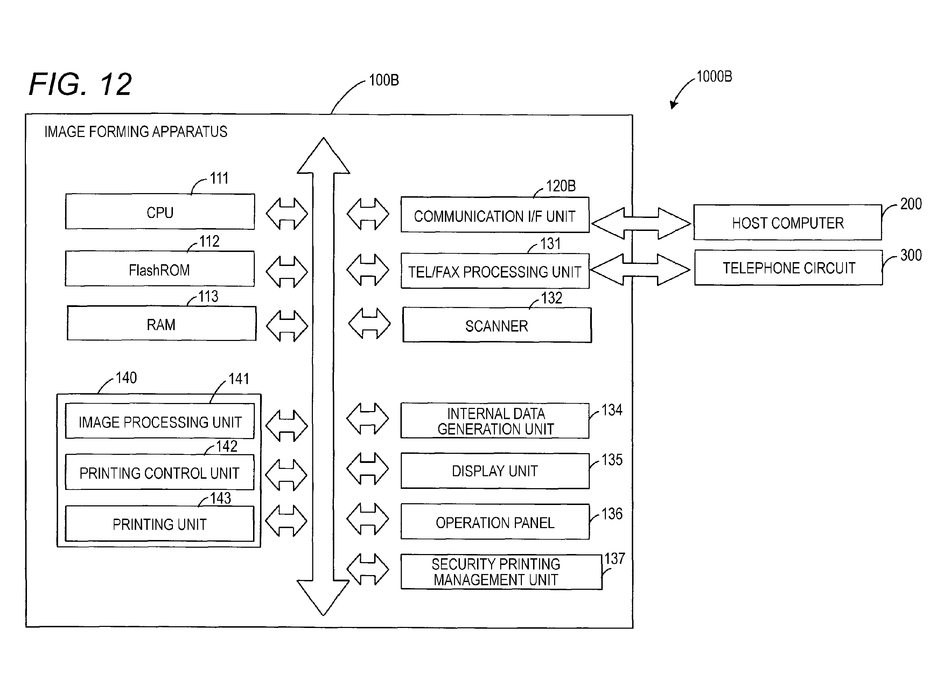

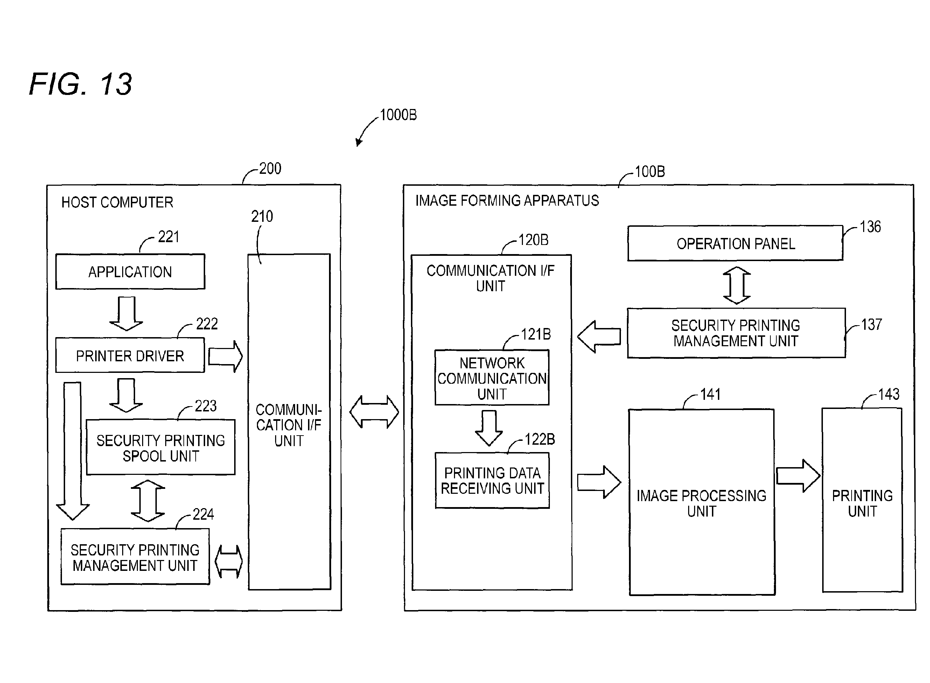

Fig. 12 is a block diagram illustrating a configuration example of the periphery of an image forming apparatus 100B according to a second embodiment. Fig. 13 is a block diagram illustrating a configuration example of an image forming apparatus 100B and the host computer (HC) 200, according to the second embodiment. An image forming system 1000B includes the image forming apparatus 100B and the HC 200.

Compared to the image forming apparatus 100 illustrated in Figs. 2 and 3, the image forming apparatus 100B includes a communication I/F unit 120B instead of the communication I/F unit 120. The communication I/F unit 120B includes a network communication unit 121B and a printing data receiving unit 122B. The printing data receiving unit 122B includes a communication management table 10B.

In the image forming apparatus 100B of Figs. 12 and 13, the same symbols or reference numerals are used to denote the same configuration as that of the image forming apparatus 100 illustrated in Figs. 2 and 3, and description thereof will be omitted or simplified.

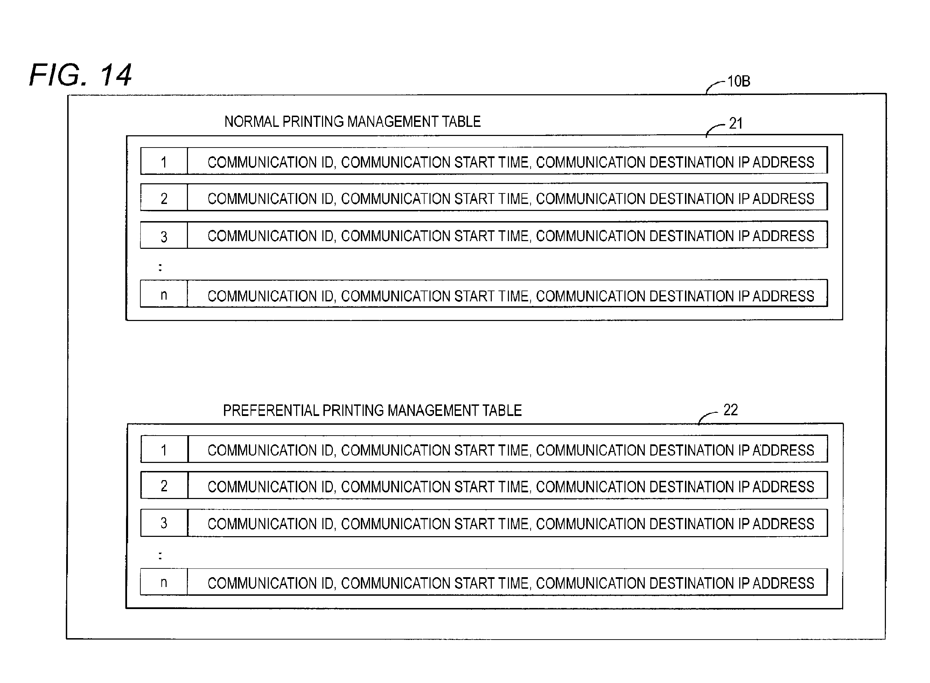

Fig. 14 is a schematic diagram illustrating a configuration example of a normal printing management table 21 and a preferential printing management table 22 which are included in a communication management table 10B according to the second embodiment. The normal printing management table 21 retains the information of a print job requested by the HC 200 at the time of performing normal printing. The preferential printing management table 22 retains the information of a print job requested by the HC 200 at the time of performing security printing.

In the same manner as the communication management table 10 illustrated in Fig. 4, the normal printing management table 21 has multiple areas. The normal printing management table 21 can store, for example, information on communication ID, communication start time, and communication destination IP address, in each area.

In the same manner as the communication management table 10 illustrated in Fig. 4, the preferential printing management table 22 has multiple areas. The preferential printing management table 22 can store, for example, information on "communication ID', "communication start time", and "communication destination IP address", in each area. There may not be more than one storage area, but only one storage area which is included in the preferential printing management table 22.

In the communication management table 10B, if information is registered in the preferential printing management table 22, the print job of the security printing can be recognized.

Next, operation examples of each unit of the image forming apparatus 100B will be described.

The operation example of the security printing management unit 137 is the same as the operation example described in the first embodiment, and the operation example of the network communication unit 121B and the operation example of the printing data receiving unit 122B are different from the operation examples described in the first embodiment.

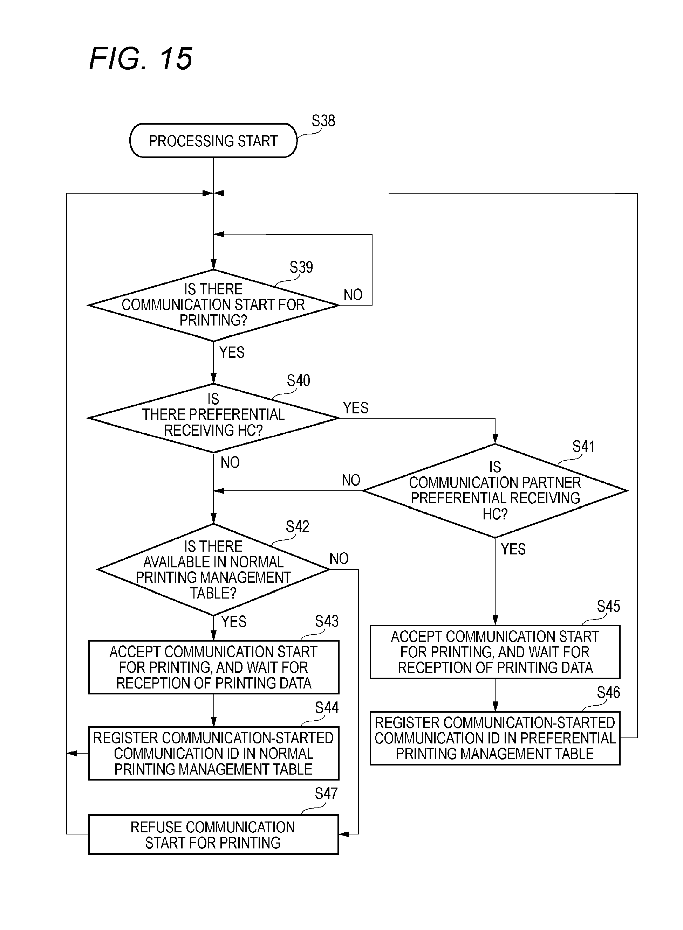

Fig. 15 is a flowchart illustrating the operation example of the network communication unit 121B according to the second embodiment. If processing is started by the network communication unit 121B (step S38), the following processing is performed. For example, the processing performed by the network communication unit 121B starts after the operation illustrated in Fig. 6.

The network communication unit 121B determines whether or not there is a communication start for printing (step S39). When there is no communication start for printing, the processing of step S39 is repeated. When there is a communication start for printing, the network communication unit 121B determines presence or absence of a preferential receiving HC, with reference to the security printing management unit 137 (step S40).

When the preferential receiving HC exists, the network communication unit 121B determines whether or not the HC 200 of a communication partner which requests a communication start for printing is the preferential receiving HC (step S41). For example, whether or not the HC is the preferential receiving HC can be determined depending on whether or not an IP address included in the information on the preferential receiving HC which is stored in the security printing management unit 137 correspond to an IP address from the HC 200.

When the preferential receiving HC does not exist, or when the HC 200 which requests the communication start for printing is not the preferential receiving HC, the network communication unit 121B determines whether or not there is an available area in the normal printing management table 21 (step S42).

When there is no available area in the normal printing management table 21, the network communication unit 121B receives the request of the communication start for printing from the HC 200 (step S43). Here, a waiting state is maintained with regard to reception of the printing data, and the printing data is not received.

Subsequently, the network communication unit 121B registers the communication ID of the HC 200 which requests the communication start for printing in the available area of the normal printing management table 21 (step S44). As a result, for example, it is possible to confirm that the HC 200 waiting for the normal printing exists, using display of the display unit 135. After the processing of step S44, the processing proceeds to step S39.

When there is no available area in the normal printing management table 21 in step S42, the network communication unit 121B refuses the communication start for printing (step S47). After the processing of step S47, the processing proceeds to step S39. That is, the processing waits until an available area is produced in the normal printing management table 21.

In step S41, when the HC 200 which requests the communication start for printing is the preferential receiving HC, the network communication unit 121B accepts the request of the communication start for printing from the HC 200 (step S45). Here, a waiting state is maintained with regard to reception of the printing data, and the printing data is not received.

Subsequently, the network communication unit 121B registers the communication ID of the HC 200 which requests the communication start for printing in the available area of the preferential printing management table 22 (step S46). As a result, for example, it is possible to confirm that the HC 200 waiting for the security printing exists, using display of the display unit 135. After the processing of step S46, the processing proceeds to step S39.

According to the operation example of the network communication unit 121B, it is possible to distinguish the normal printing management table 21 and the preferential printing management table 22, depending on whether the printing is normal printing or security printing. Thus, for example, an amount of data stored in the normal printing management table 21 or the preferential printing management table 22 is decreased, and thereby, it is possible to improve search efficiency of the table at the time of the normal printing and the security printing. Thus, it is possible to further reduce a waiting time for image forming of the user.

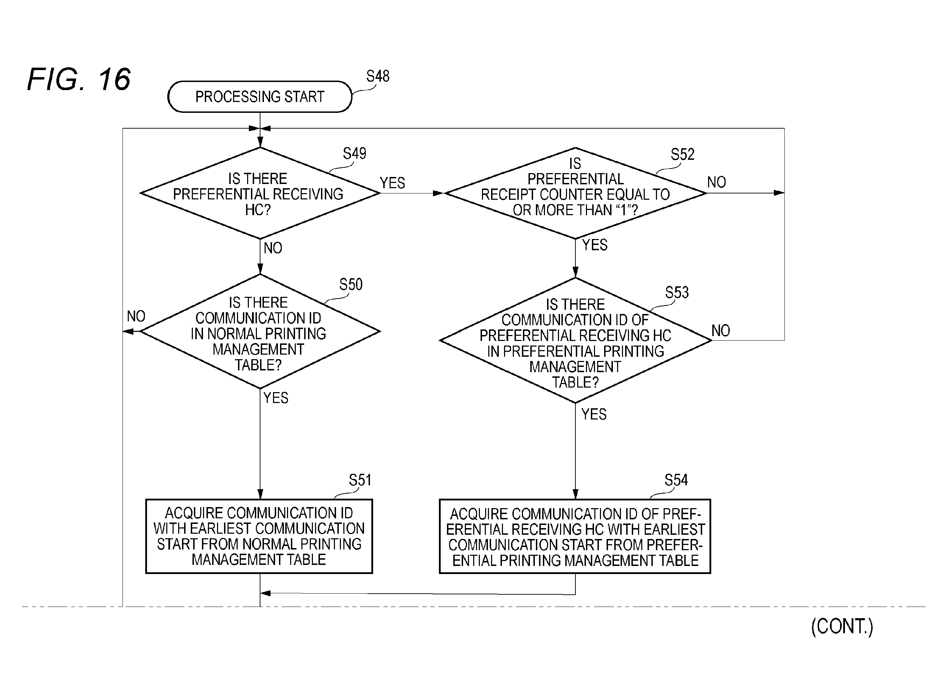

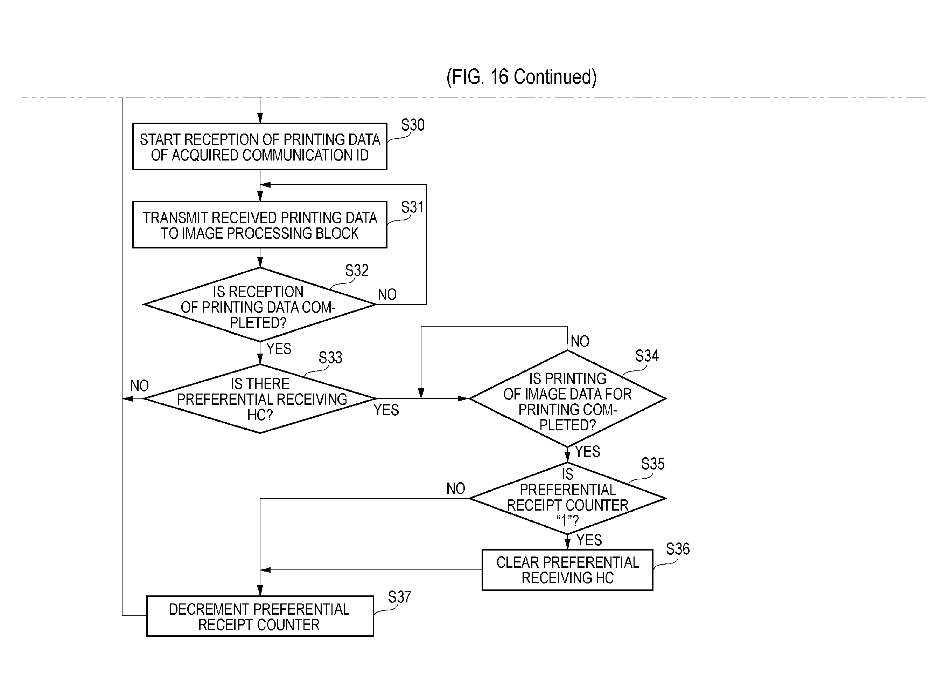

Fig. 16 is a flowchart illustrating the operation example of the printing data receiving unit 122B according to the second embodiment. If the processing is started by the printing data receiving unit 122B (step S48), the following processing is performed. For example, the processing performed by the printing data receiving unit 122B is started asynchronously with respect to the operation of the network communication unit 121B. In Fig. 16, the same reference numerals are used to denote the same processing tasks as in Fig. 8, and description thereof will be omitted or simplified.

The printing data receiving unit 122B determines presence or absence of the preferential receiving HC, with reference to the security printing management unit 137 (step S49).

When the preferential receiving HC exists, the printing data receiving unit 122B determines whether or not a communication ID is stored in one or more area of the normal printing management table 21 (step S50). Whether or not a communication ID is stored in the normal printing management table 21 corresponds to whether or not the HC 200 waiting for the normal printing exists. When a communication ID is not stored in the normal printing management table 21, the processing proceeds to step S49.

When a communication ID is stored in the normal printing management table 21, the printing data receiving unit 122B acquires a communication ID with the earliest communication time corresponding to a communication ID of the communication IDs of the HC 200B stored in the normal printing management table 21 (step S51).

When the preferential receiving HC exists in S49, the printing data receiving unit 122B determines whether or not the value of the preferential receipt counter indicates greater than "1", with reference to the preferential receipt counter stored in the security printing management unit 137 (step S52). When the value of the preferential receipt counter indicates less than "1", the processing proceeds to step S49.

When the value of the preferential receipt counter indicates equal to or greater than "1", the printing data receiving unit 122B determines whether or not a communication ID is stored in one or more areas of the preferential printing management table 22 (step S53). Whether or not a communication ID is stored in the preferential printing management table 22 corresponds to whether or not the HC 200 waiting for the security printing exists. When a communication ID is not stored in the preferential printing management table 22, the processing proceeds to step S49.

When a communication ID is stored in the preferential printing management table 22, the printing data receiving unit 122B acquires a communication ID with the earliest communication time corresponding to a communication ID of the communication IDs of the HC 200B stored in the preferential printing management table 22 (step S54).

After the processing of S51 or S54, the printing data receiving unit 122B performs processing tasks of steps S30 to S37.

According to the operation examples of the printing data receiving unit 122B, the normal printing is processed according to the print job of the normal printing management table 21, and the print job of the security printing is processed according to the preferential printing management table 22. When a preferential receiving HC which performs the security printing exists, the printing data receiving unit 122B processes the print job of the preferential printing management table 22 more preferentially than the print job of the normal printing management table 21. As a result, when the user requests the security printing, it is possible to reduce a time that the user waits at the image forming apparatus 100B.

According to the image forming apparatus 100B, the normal printing management table 21 and the preferential printing management table 22 exists separately, and thus, even when multiple print jobs of normal printing are registered in the normal printing management table 21, it is possible to easily acquire the print job of security printing from the preferential printing management table 22. Thus, it is possible to reduce a time required for searching for the print job in the communication management table 10B. Thus, it is possible to reduce a time that the user waits at the image forming apparatus 100B.

In addition, the present invention is not limited to the configuration of the above-described embodiments, and can also be applied to all configurations which can achieve the functions described in the claims or the functions included in the configurations of the present embodiments.

For example, the above-described embodiments exemplify a case where image data formed by the image forming apparatuses 100 and 100B is output using a printing function, but an image may be formed by a method other than printing. For example, a receiving apparatus located at a remote place may output an image using the function of a facsimile. In this case, a user who acquires an image in a remote place grasps authentication information (for example, a passcode) in advance, and the user on the transmission side and the user on the receiving side may be a different person. In this way, the image forming apparatuses 100 and 100B may form an image and output the image, as a printer, a copy machine, a facsimile, an image scanner, and a multi-function printer having such functions, for example.

The above-described embodiments exemplify that a passcode or password is used as the authentication information, but other authentication information (for example, fingerprint authentication, face authentication, image authentication) may be used instead of the passcode or password.

In addition, an image forming method which is applied to the image forming apparatuses 100 and 100B may be realized using a dedicated hardware circuit such as a logic circuit, and may be provided as a program that a computer for control can execute.

The present invention is useful to an image forming apparatus, an image forming method, and the like which can form an image by ensuring security and can reduce a waiting time for image forming.

## Claims

1. An image forming apparatus comprising:
a communication processing unit that receives an image forming request for requesting image forming through a predetermined communication network, and controls reception of image forming data for forming an image corresponding to the image forming request;
an operation unit that accepts a first operation indicating a start operation of secure image forming; and
an image forming unit that forms the image according to the image forming data when the image forming data is received by the communication processing unit, wherein
the image forming request includes a first image forming request indicating a secure image forming request, and a second image forming request indicating a non-secure image forming request,
the image forming data includes first image forming data corresponding to the first image forming request, and second image forming data corresponding to the second image forming request, and
when the first image forming request and the second image forming request are found, the communication processing unit receives the first image forming request and the second image forming request, stores information on the first image forming request and the second image forming request, and also receives the first image forming data and the second image forming data, and when the first operation is accepted through the operation unit, the communication processing unit receives the first image forming request and the second image forming request, stores information on the first image forming request and the second image forming request, and also suspends reception of the second image forming data wait while receiving the first image forming data.

2. The image forming apparatus according to claim 1, wherein
the communication processing unit establishes a communication session for communicating the image forming data between a communication device which transmits the image forming request and the image forming apparatus according to the image forming request.

3. The image forming apparatus according to any one of claims 1 to 2, further comprising:
a display unit that includes a screen which displays visible information; and
a secure management unit that displays in the display unit, information on a first communication device which transmits the first image forming request received by the communication processing unit, or information on an image forming job corresponding to the first image forming request, when the first operation is accepted through the operation unit.

4. The image forming apparatus according to claim 3, wherein
the secure management performs authentication processing with respect to the first communication device, and displays in the display unit, information on an image forming job corresponding to the first image forming request that the first communication device, to which the authentication processing is successfully performed, transmits.

5. An image forming system in which a communication device and an image forming apparatus are connected together through a predetermined communication network,
wherein the communication device includes:
a first communication processing unit that transmits an image forming request, and controls transmission of image forming data corresponding to the image forming request,
wherein the image forming apparatus includes:
a second communication processing unit that receives the image forming request, and controls reception of the image forming data;
an operation unit that accepts a first operation indicating a start operation of secure image forming; and
an image forming unit that forms an image according to the image forming data when the image forming data is received by the second communication processing unit,
wherein the communication device includes:
a first communication device that transmits a first image forming request indicating a secure image forming request, and transmits first image forming data corresponding to the first image forming request; and
a second communication device that transmits a second image forming request indicating a non-secure image forming request, and transmits second image forming data corresponding to the second image forming request, and
wherein when the first image forming request and the second image forming request are found, the second communication processing unit receives the first image forming request and the second image forming request, stores information on the first image forming request and the second image forming request, and also receives the first image forming data and the second image forming data, and when the first operation is accepted through the operation unit, the second communication processing unit receives the first image forming request and the second image forming request, stores information on the first image forming request and the second image forming request, and also suspends reception of the second image forming data while receiving the first image forming data.

6. The image forming system according to claim 5, wherein
the communication device includes a storage unit that stores the image forming data in a case where the image forming request is transmitted, and
the first communication processing unit transmits the image forming data stored in the storage unit to the image forming apparatus when a transmission request for the image forming data is received from the image forming apparatus.

7. An image forming method in an image forming apparatus, the image forming method comprising:
a communication processing step of receiving an image forming request through a predetermined communication network, and of controlling reception of image forming data corresponding to the image forming request;
a step of accepting a first operation indicating a start operation of secure image forming through an operation unit; and
a step of forming an image according to the image forming data when the image forming data is received, wherein
the image forming request includes a first image forming request indicating a secure image forming request, and a second image forming request indicating a non-secure image forming request,
the image forming data includes first image forming data corresponding to the first image forming request, and second image forming data corresponding to the second image forming request, and
in the communication processing, when the first image forming request and the second image forming request are found, the first image forming request and the second image forming request are received, information on the first image forming request and the second image forming request is stored, and also the first image forming data and the second image forming data are received, and when the first operation is accepted, the first image forming request and the second image forming request are received, information on the first image forming request and the second image forming request is stored, and also reception of the second image forming data is suspended while receiving the first image forming data.
